(19) **Europäisches Patentamt European Patent Office Office européen des brevets**

(11) **EP 2 171 967 B1**

(12) **FASCICULE DE BREVET EUROPEEN**

(45) Date de publication et mention
de la délivrance du brevet:
**08.02.2017 Bulletin 2017/06**

(51) Int Cl.:
*H04L 29/06* (2006.01)          *H04L 29/12* (2006.01)
*H04L 12/24* (2006.01)          *H04M 3/22* (2006.01)
*H04L 12/66* (2006.01)

(21) Numéro de dépôt: **08806110.6**

(22) Date de dépôt: **27.06.2008**

(86) Numéro de dépôt international:
**PCT/FR2008/051182**

(87) Numéro de publication internationale:
**WO 2009/004271 (08.01.2009 Gazette 2009/02)**

(54) **SERVEUR DE CONFIGURATION D'ENREGISTREMENT DE CLIENTS A UN SERVICE DEPLOYE SUR UN RESEAU IP, TERMINAL CLIENT ET RESEAU IP ASSOCIES**

KONFIGURATIONSSERVER ZUR REGISTRIERUNG VON CLIENTS IN EINEM IP-NETZWERK-BASIERTEN SERVICE, ZUGEHÖRIGER CLIENT UND ZUGEHÖRIGES IP-NETZWERK.

CONFIGURATION SERVER FOR CLIENTS REGISTRATION TO AN IP NETWORK BASED SERVICE, RELATED CLIENT TERMINAL AND IP NETWORK

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **28.06.2007 FR 0756126**

(43) Date de publication de la demande:
**07.04.2010 Bulletin 2010/14**

(73) Titulaire: **Orange**
**75015 Paris (FR)**

(72) Inventeurs:
• **BOUCADAIR, Mohamed**
**Caen 14000 (FR)**
• **NOISETTE, Yoann**
**F-14320 May Sur Orne (FR)**

(56) Documents cités:
**JP-A- 2006 042 176     US-B1- 7 158 627**

• **HILT I WIDJAJA BELL LABS/ALCATEL-LUCENT D MALAS LEVEL 3 COMMUNICATIONS H SCHULZRINNE COLUMBIA UNIVERSITY V: "Session Initiation Protocol (SIP) Overload Control; draft-hilt-sipping-overload-01.txt" IETF STANDARD-WORKING-DRAFT, INTERNET ENGINEERING TASK FORCE, IETF, CH, no. 1, 3 mars 2007 (2007-03-03), XP015049059 ISSN: 0000-0004 cité dans la demande**

**Description**

## 1. Domaine de l'invention

Le domaine de l'invention est celui des réseaux de télécommunications, et plus particulièrement celui de services multimédia déployés sur des réseaux IP.

La présente invention concerne un serveur de configuration d'enregistrements de terminaux clients à un service multimédia déployé sur ledit réseau et accessible aux terminaux connectés audit réseau.

Elle concerne également le réseau IP comprenant ledit serveur de configuration. Elle concerne en outre un terminal client connecté audit réseau et apte à s'enregistrer à un tel service.

Elle concerne enfin le procédé mis en oeuvre par un tel serveur de configuration. L'invention trouve son application dans la gestion de crises survenant lors de l'enregistrement de terminaux client à un service multimédia déployé sur un réseau IP, en particulier un service de téléphonie sur IP, notamment pour éviter les surcharges éventuelles.

## 2. Art antérieur

Le réseau IP (*Internet Protocol*) devient de plus en plus le support universel d'une multitude de services et applications. C'est le réseau fédérateur adopté par les opérateurs pour mutualiser leurs offres de service hétérogènes. Parmi ces services, la téléphonie ou voix sur IP, connue aussi sous le sigle VoIP pour *(Voice over IP)*, a pris ces dernières années une place prépondérante, au point que tous les fournisseurs de services disposent aujourd'hui d'offres IP à destination de leurs clients. Ces offres de service, s'appuyant donc sur le protocole IP, s'opposent de par leur conception et leur philosophie à la téléphonie traditionnelle qui s'appuie sur la commutation de circuits. L'avantage avancé pour le passage à la téléphonie sur IP, outre le coût moindre des communications, est la capacité estimée à pouvoir faire du couplage de services avec le monde de l'informatique et l'Internet en particulier.

Néanmoins, afin de pouvoir conserver les utilisateurs qu'elle a attirés, la téléphonie sur IP se doit de les satisfaire sur des points importants auxquels ils étaient habitués avec les offres basées sur la commutation circuit dite aussi RTC (*Réseau Téléphonique Commuté*). Notamment, la qualité de service, la robustesse, la haute disponibilité et la résistance aux pannes sont des facteurs déterminants pour les utilisateurs de services téléphoniques, qui sont avant tout des services d'échange de flux temps réel. Les opérateurs de télécommunications, fournisseurs de services, doivent particulièrement se prémunir contre les phénomènes de surcharges des éléments composant le service. Une surcharge peut être définie comme étant l'incapacité du service, ou d'éléments du service, à traiter une demande, souvent à cause d'une insuffisance de ressources à disposition pour traiter ladite demande. La gestion des surcharges est d'autant plus délicate que le phénomène a tendance à s'entretenir lui-même. En effet, le problème affecte souvent progressivement les éléments du service qui tentent toujours d'écouler le trafic, et se trouvent à leur tour surchargés. De plus, une partie des ressources est alors utilisée pour envoyer des messages d'erreurs ou d'alertes, diminuant d'autant les ressources disponibles pour pallier le problème. Dans le cas de la téléphonie sur IP, un facteur dégradant supplémentaire tient à la réémission des requêtes qui est souvent mise en oeuvre pour pallier de potentielles erreurs liées au transport sur le réseau IP. Par exemple, la RFC (*Request For Comment*) 3261 définissant le protocole de signalisation SIP (*Session Initiation Protocol*) décrit un comportement de réémission pour les messages de type INVITE et les messages non-INVITE. A titre d'exemple, pour un message de type INVITE, la procédure de retransmission est la suivante : un timer de retransmission T1 est défini. Le message INVITE est réémis à chaque intervalle correspondant à un double de T1. Au bout de 7 tentatives, le client SIP cesse la procédure de retransmission. La valeur de T1 par défaut étant 250ms, la procédure de retransmission s'arrête lorsqu'une réponse a été reçue ou, sinon à l'issue d'une période de 32 secondes.

Des règles d'ingénierie permettent aux opérateurs de télécommunications d'éviter le phénomène de surcharge dans des conditions normales de fonctionnement, d'une part en dimensionnant de manière efficace leurs services, d'autre part en mettant en oeuvre des mécanismes de partage de charge (ou *load balancing* en anglais) entre les noeuds constituant lesdits services. Cependant, ces mécanismes s'avèrent pour la plupart du temps insuffisants et inadaptés à l'occasion d'évènement exceptionnels (e.g. nouvelle année, tremblement de terre, coupure d'électricité, événements graves tels que les attentats du 11 septembre, etc.) ou bien encore suite à une panne. C'est donc dans la gestion de pics de charge (ou encore *burst* en anglais) au moment du rétablissement du service que les services actuels connaissent essentiellement des faiblesses.

L'un des phénomènes de surcharge les moins évidents à appréhender est celui dit couramment "*Avalanche Restart*". Il se produit typiquement lorsqu'un nombre important de clients tente simultanément d'accéder (de s'enregistrer) au service. Ce phénomène peut intervenir en diverses occasions, comme par exemple dans le cas du scenario dit "*Manhattan Reboot*", qui voit une coupure électrique importante toucher une zone urbaine importante, comme Manhattan (phénomène fréquent aux US). Dans cette situation, lorsque l'électricité est rétablie, tous les téléphones redémarrent simultanément et vont donc chercher à s'enregistrer au service, entraînant un flot important de requêtes sur une courte période. Encore une fois, le service de l'opérateur est souvent dimensionné pour pouvoir gérer un nombre important de clients dans des conditions de fonctionnement normales, mais lors de tels pics de charge, le service est généralement incapable de faire face, ce qui retarde d'autant un retour à une situation normale. Un autre exemple, à une échelle moindre, peut intervenir au niveau d'une entreprise dont un serveur tomberait en panne. Une solution souvent proposée est de disposer d'un serveur de secours, mais ce serveur doit alors traiter les demandes de tous les clients rattachés à celui qui est défectueux, sur une courte période, créant potentiellement un pic de trafic et donc une surcharge.

Une manière simple d'appréhender un phénomène de surcharge est de notifier les clients (par client, nous entendons le rôle « client » au sens large du terme, et pas seulement le client final du service. Typiquement un élément du service jouant un rôle serveur,agit en client lorsqu'il sollicite un autre élément du service). Concrètement, lorsqu'il reçoit une requête de la part d'un client, le service lui retourne un code d'erreur indiquant le problème. En SIP, la RFC 3261 définit le code de réponse "503 Service Unavailable" qui est transmis par un élément en situation de surcharge. Ce code signifie que l'élément de service sollicité n'est pas en mesure de traiter la requête suite à une surcharge temporaire ou une opération de maintenance. L'élément de service en question peut à cette occasion indiquer un délai à l'expiration duquel le client pourra effectuer une nouvelle tentative (grâce au champ "Retry-After"). Un client recevant un tel code de réponse est censé solliciter un autre élément du service pour satisfaire sa demande, au moins jusqu'à expiration du délai "Retry-After" (s'il est indiqué) et si la possibilité de contacter un autre élément de service est offerte.

L'objectif principal d'une telle technique est essentiellement de faire migrer (temporairement) les demandes d'enregistrement vers un autre élément du service apte à les traiter. Le délai "Retry-After" sert dans ce cas à indiquer la durée pendant laquelle cette prise en charge doit s'effectuer. Il faut noter à cet égard que la procédure pour déterminer l'intervalle au bout duquel le service sera de nouveau en mesure de répondre à la requête en question, pendant un état de surcharge, est difficile à mettre en place, sans compter que la mise en place d'une telle procédure par l'élément congestionné risque d'alourdir le système et de le maintenir plus longuement en état de surcharge.

Si, à première vue, la simple notification d'une surcharge comme décrite dans la RFC3261 semble pouvoir suffire à "étouffer" un pic de charge, un tel mécanisme présente un certain nombre de limitations :

- amplification de la surcharge du service : le fait de réorienter un client vers un autre élément du service, qui est lui-même susceptible d'être surchargé, peut induire un accroissement non négligeable du nombre de messages échangés, augmentant la surcharge globale et pouvant même aboutir à un effondrement du service. Cette technique n'est donc pas adaptée au cas où plus d'un élément est en situation de surcharge;
- sous-utilisation des ressources : la portée d'un message type SIP "503" n'est pas suffisamment précise. Typiquement, si plusieurs serveurs sont regroupés sous un même nom de domaine ou FQDN (pour *Fully Qualified Domain Name* en anglais), et que l'un d'eux est surchargé, un client pourrait considérer qu'il ne faut plus solliciter le FQDN en question, alors que dans la réalité seul un serveur parmi ceux pointés par le FQDN est surchargé;

- manque de souplesse : la notification d'un délai grâce au champ "Retry-After" permet à un élément surchargé d'indiquer au demandeur de s'adresser temporairement à un autre élément du service. Ainsi l'élément surchargé redirige tout le trafic qui lui arrive, sans possibilité de ne rediriger qu'une partie seulement;
- ambiguïté d'utilisation : la procédure décrite dans la RFC3261 ne précise pas suffisamment les circonstances selon lesquelles le code réponse "503" doit être utilisé.

Une alternative est en cours de discussion au sein des organismes de standardisation, notamment l'IETF (*Internet Engineering Task Force*). Cette alternative, décrite dans le document intitulé "The Session Initiation Protocol (SIP) Congestion Header Field", par Malas *et al.*, publié à l'IETF en mai 2006, consiste en l'ajout d'un champ dédié au traitement des phénomènes de congestion/de surcharge dans la réponse à la requête d'enregistrement, par les éléments du service. L'objectif de cette proposition est de fournir une meilleure qualification de l'état de congestion et pallier les approximations de la technique antérieure. Elle repose donc sur un entête SIP dédié, "CONGESTION", qui peut être inséré dans toute réponse SIP. Il permet notamment de caractériser le degré de congestion constaté (valeur de 0 à 4), le type de congestion (CPU, réseau...), l'élément de service concerné ainsi qu'un délai au-delà duquel une nouvelle tentative pourra être effectuée (dans l'hypothèse où le degré de congestion est à son maximum). Cette solution est similaire au 'Retry-After' car l'élément de service doit générer un message et exécuter une procédure pour déterminer son retour à la normale, chose qui n'est pas facilement réalisable lors des phénomènes de crise.

Une approche plus élaborée est proposée dans le document intitulé "Session Initiation Protocol (SIP) Overload Control", par Hilt *et al.*, en mars 2007, dans lequel sont définies différentes méthodes de contrôle et algorithmes associés. Typiquement, il décrit comment un élément du service surchargé peut indiquer aux éléments qui le sollicitent de diminuer leurs envois, l'idée étant de réguler les sollicitations entrantes en cas de surcharge. Trois méthodes sont décrites : définir le taux d'envoi de sollicitations accepté, indiquer aux éléments demandeurs de diminuer le nombre de sollicitations d'un certain pourcentage en cas de surcharge ou définir des fenêtres d'acquittement des messages qui peuvent être ajustées. L'ensemble de ses propositions s'accompagne de l'exploitation d'un nouvel entête SIP ("Load Header") qui contient diverses informations permettant de caractériser le taux et les conditions de la surcharge. Un nouveau code de réponse "520" est également défini exclusivement pour notifier les situations de surcharge.

### 3. **Inconvénients de l'art antérieur**

Dans le meilleur des cas, de telles alternatives permettent une gestion correcte des situations de crise, mais ne permettent pas de garantir une éradication rapide du phénomène de surcharge. L'inconvénient majeur de ces propositions est qu'elles n'agissent pas de manière préventive. Or, les diverses défaillances qui ont affecté les offres de téléphonie sur IP ces dernières années ont démontré les limites opérationnelles de ce type de solutions, puisque bien souvent le service éprouve de grandes difficultés à se relancer. Pire, dans le cadre d'un problème de type "*Avalanche Restart*", l'élément de service qui redémarre doit initialiser tous les processus proposés par ces alternatives, augmentant d'autant les opérations à effectuer lors du redémarrage, donc le pic de surcharge et le temps nécessaire pour le redémarrage effectif du service.

La demande de brevet JP-2006042176 concerne un système téléphonique IP dans lequel un serveur de gestion de réseau est connecté à une pluralité de téléphones IP par un réseau, et dans lequel les téléphones IP mettent en oeuvre lors de leur démarrage une procédure d'enregistrement auprès du serveur de gestion de réseau. Le serveur de gestion de réseau comprend des moyens de calcul d'une valeur de timer de démarrage, et des moyens d'optimisation de cette valeur de timer de démarrage. Les moyens de calcul de valeur de timer de démarrage calculent, sous le contrôle des moyens d'optimisation de valeur de timer de démarrage, une valeur de timer de démarrage pour les téléphones IP et les groupes de téléphones IP, ladite valeur étant différente pour chaque téléphone IP ou groupe de téléphones IP. Les moyens de calcul de valeur de timer de démarrage transmettent ensuite la valeur de timer de démarrage calculée à chaque téléphone IP. Chaque téléphone IP enregistre la valeur de timer de démarrage transmise par le serveur de gestion de réseau, et s'enregistre auprès du serveur de gestion de réseau en tenant compte de la valeur de timer de démarrage. Mais cette demande JP-2006042176 n'enseigne pas comment éviter la surcharge due à la réémission de requêtes d'enregistrement par des téléphones IP dont la requête d'enregistrement selon cette demande n'a pas reçu de réponse de la part du serveur de gestion de réseau.

### 4. **Exposé de l'invention**

Il existe un besoin de proposer une solution permettant d'anticiper un pic de charge survenant suite à une défaillance du service.

Ces objectifs, ainsi que d'autres qui apparaîtront par la suite, sont atteints à l'aide d'un serveur de configuration d'enregistrements d'un client, utilisant au moins un terminal, à un service multimédia déployé sur un réseau IP par une pluralité d'éléments de service, ledit serveur de configuration comprenant des moyens d'envoi audit terminal de paramètres de configuration adaptés audit client avant son enregistrement auprès d'un desdits éléments de service.

Selon l'invention, d'une part, ledit serveur comprend des moyens d'affectation dudit client à un groupe de clients parmi une pluralité de groupes de clients selon une première répartition, dépendant au moins d'une capacité de traitement dudit élément de service, des moyens de calcul de premiers paramètres de distribution temporelle des enregistrements destinés aux clients dudit groupe, lesdits paramètres définissant un premier rythme d'enregistrement propre audit groupe, et en ce que lesdits moyens d'envoi sont aptes à envoyer, audit terminal du client, lesdits premiers paramètres de distribution temporelle d'enregistrements destinés audit groupe.

Ainsi, l'invention repose sur une approche tout à fait nouvelle et inventive de la gestion des enregistrements auprès d'un service multimédia déployé sur un réseau IP. En effet, l'invention propose d'organiser les terminaux clients par groupes et d'imposer, pour chacun de ces groupes, un rythme d'envoi des requêtes d'enregistrements par les terminaux des clients souhaitant accéder au service. De cette manière, même en cas de défaillance d'un élément de service du réseau, tel qu'un serveur de proximité, lesdits terminaux clients, au lieu d'émettre tous en même temps leur requête d'enregistrement, continuent de suivre le rythme d'enregistrement propre à leur groupe. Par conséquent, lorsque l'élément de service redevient opérationnel, il ne reçoit pas plus de requêtes d'enregistrement que sa capacité dans un intervalle de temps donné. L'invention permet ainsi de résoudre le problème technique d'éviter les pics de surcharge, tel que le phénomène « *Avalanche Restart* », puisqu'elle met en place une solution préventive de distribution temporelle des enregistrements.

Cette solution s'appuie avantageusement sur le ou les serveurs de configuration (*provisioning*) qui sont systématiquement interrogés par un terminal client, souhaitant s'enregistrer auprès d'un élément du service, pour récupérer des informations de configuration nécessaires à l'accès au service demandé. Selon l'invention, c'est le serveur de configuration qui ajoute aux informations de configuration envoyées selon l'art antérieur, des informations de configuration définissant un rythme temporel des enregistrements des clients en fonction de leur groupe.

Les terminaux clients sont affectés à un groupe selon une première répartition définie par des règles préétablies administrées par l'opérateur, dépendant au moins d'une capacité de traitement de l'élément de service. Par exemple, cette répartition peut se fonder sur un critère de localisation géographique, ou bien sur un nombre de terminaux clients déjà enregistrés, typiquement les 100000 premiers terminaux sont affectés au premier groupe, les 100000 suivants au deuxième groupe, etc. La distribution temporelle est effectuée sur la base des groupes de terminaux clients, ce qui permet d'échelonner dans le temps les réenregistrements au service.

Selon l'invention, d'autre part, lesdits premiers paramètres de distribution temporelle des enregistrements comprennent une durée d'attente à l'issue de laquelle un terminal client ayant envoyé une requête de réenregistrement au service et appartenant audit groupe peut réémettre sa requête auprès du service, lorsqu'il n'a pas reçu de réponse.

On peut ainsi, grâce à l'invention, limiter la fréquence de réémission des requêtes d'enregistrement en cas d'absence de réponse de la part du serveur de proximité, par exemple en cas de défaillance.

Selon un autre aspect de l'invention, lesdits premiers paramètres de distribution temporelle des enregistrements comprennent au moins une date d'échéance indiquant un instant auquel les terminaux clients appartenant à un de ladite pluralité de groupes doivent émettre une requête d'enregistrement auprès dudit service.

Un avantage est de forcer les terminaux clients d'un groupe à envoyer une demande d'enregistrement au serveur de proximité à une date précise, déterminée à l'avance, donc de manière synchronisée. Ceci permet d'initier la distribution temporelle en définissant un point de départ pour l'instauration du rythme des enregistrements.

Selon un autre aspect de l'invention, lesdits premiers paramètres de distribution temporelle des enregistrements comprennent une durée d'expiration à l'issue de laquelle les terminaux clients enregistrés audit service et appartenant à un de ladite pluralité de groupes doivent se réenregistrer auprès dudit service.

Un avantage de ce paramètre est de définir la fréquence à laquelle les terminaux clients d'un groupe doivent se réenregistrer auprès du serveur d'accès au service.

Selon encore un autre aspect de l'invention, lesdits moyens de calcul sont aptes à recalculer les premiers paramètres de distribution temporelle des enregistrements à intervalles réguliers et lesdits moyens d'envoi sont aptes à les envoyer aux terminaux clients enregistrés dudit groupe. On notera que lesdits moyens de calculs mis en oeuvre par le serveur de configuration sont généralement configurés par l'opérateur.

Notamment, une nouvelle date peut être fournie aux terminaux clients d'un groupe pour les forcer à envoyer une demande d'enregistrement. Un avantage est de resynchroniser les éléments de services et les terminaux clients du réseau IP, qui sont soumis à des dérives temporelles et de prendre en compte d'éventuels terminaux nouvellement enregistrés. Le processus est ainsi ré-initié et resynchronisé de façon régulière.

Selon un autre aspect de l'invention, ledit serveur de configuration comprend des moyens de détection d'un risque de surcharge dudit élément de service, et, en cas de risque de surcharge détecté, lesdits moyens d'affectation sont aptes à affecter audit client un deuxième groupe selon une deuxième répartition et lesdits moyens de calcul sont aptes à calculer en outre des deuxièmes paramètres de distribution temporelle définissant un deuxième rythme d'enregistrements propre audit deuxième groupe.

Un avantage est que le serveur met en oeuvre une procédure réactive plus adaptée que la procédure préventive à la gestion du retour opérationnel massif des terminaux clients. En effet, selon la procédure réactive, les groupes sont formés à la volée, par exemple en fonction d'un nombre de requêtes reçues et d'une capacité dudit service à traiter les requêtes.

De tels moyens de détection peuvent simplement être la réception d'une alerte émise suite à l'intervention humaine des équipes de maintenance.

Avantageusement, lesdits moyens de détection d'un risque de surcharge sont aptes à détecter un risque de surcharge lorsqu'une fréquence de requêtes d'enregistrement reçues est au-delà d'un seuil prédéterminé (Se). Cette mesure peut être faite par le serveur de configuration lui-même ou bien reçue d'un élément de service. Un avantage de ce mode de réalisation est de ne pas nécessiter d'intervention humaine.

Selon un autre aspect de l'invention, lesdits deuxièmes paramètres de distribution temporelle comprennent au moins une durée d'attente avant enregistrement définissant la durée à l'issue de laquelle ledit terminal peut envoyer une première requête d'enregistrement audit service.

Un avantage est d'éviter que les terminaux clients, de retour sur le réseau, n'envoient immédiatement et massivement leurs requêtes d'enregistrement et ne saturent le service.

Selon un autre aspect de l'invention, lorsque ladite fréquence de requêtes d'enregistrement reçues passe en deçà dudit seuil, ledit serveur est apte à déclencher la mise en oeuvre desdits moyens de répartition des clients en une pluralité de groupes selon la première répartition, de calcul de premiers paramètres de distribution temporelle des enregistrement et d'envoi desdits premiers paramètres auxdits clients en fonction de leur appartenance à un desdits premiers groupes.

Un avantage est que le serveur de configuration, lorsqu'il détecte un retour à la normale, peut alors décider de retourner à la procédure préventive en déclenchant les moyens d'affectation, de calcul et d'envoi précédemment décrits. On notera que le serveur de configuration peut fournir dès l'enregistrement initial après la panne, les premiers paramètres nécessaires à la mise en oeuvre de la solution préventive. Le deuxième paramètre de durée d'attente avant enregistrement lui permet typiquement de définir un démarrage effectif un peu plus tard pour laisser le temps au pic de charge d'être absorbé par la mesure réactive.

**EP 2 171 967 B1**

L'invention concerne également un terminal d'un client connecté à réseau IP sur lequel est déployé un service multimédia au moyen d'une pluralité d'éléments de service, ledit terminal comprenant des moyens de réception de paramètres de configuration avant son enregistrement auprès d'un desdits éléments de service et des moyens d'enregistrement au service auprès dudit élément de service, selon la configuration reçue.

Selon l'invention, ledit terminal est caractérisé en ce que, ledit serveur de configuration comprenant des moyens d'affectation dudit client à un premier groupe de clients parmi une pluralité de groupes de clients selon une première répartition, dépendant au moins d'une capacité de traitement dudit élément de service, des moyens de calcul de premiers paramètres de distribution temporelle des enregistrements destinés aux terminaux clients dudit premier groupe, lesdits paramètres définissant un rythme d'enregistrement propre audit groupe, et des moyens d'envoi aptes à envoyer audit terminal du client, lesdits premiers paramètres de distribution temporelle d'enregistrements destinés audit groupe, lesdits moyens d'enregistrement sont aptes à mettre en oeuvre un enregistrement dudit client auprès dudit service conforme audit premier rythme. En outre, ledit terminal est caractérisé en ce que lesdits premiers paramètres de distribution temporelle des enregistrements comprennent une durée d'attente à l'issue de laquelle un terminal client ayant envoyé une requête de réenregistrement au service et appartenant audit groupe peut réémettre sa requête auprès du service, lorsqu'il n'a pas reçu de réponse.

L'invention concerne en outre un réseau IP comprenant un serveur de configuration d'enregistrement d'un client utilisant au moins un terminal à un service multimédia déployé sur ledit réseau au moyen d'éléments de service, ledit terminal, comprenant des moyens d'enregistrement auprès d'au moins un desdits éléments de service, ledit serveur de configuration comprenant des moyens de réception d'une requête de configuration dudit client et des moyens d'envoi de paramètres de configuration audit terminal client, caractérisé en ce que :

- ledit serveur de configuration comprend des moyens d'affectation dudit client à un premier groupe de clients parmi une pluralité de groupes de clients selon une première répartition, des moyens de calcul de premiers paramètres de distribution temporelle des enregistrements destinés aux clients dudit premier groupe, lesdits paramètres définissant un premier rythme d'enregistrement propre audit groupe, lesdits moyens d'envoi étant aptes à envoyer audit terminal du client lesdits premiers paramètres de distribution temporelle d'enregistrement propres à son groupe; et en ce que :
- lesdits moyens d'enregistrement dudit terminal du client sont aptes à mettre en oeuvre un enregistrement dudit client auprès dudit élément de service conforme audit premier rythme; et en ce que :
- lesdits premiers paramètres de distribution temporelle des enregistrements comprennent une durée d'attente à l'issue de laquelle un terminal client ayant envoyé une requête de réenregistrement au service et appartenant audit groupe peut réémettre sa requête auprès du service, lorsqu'il n'a pas reçu de réponse.

L'invention concerne aussi un procédé de configuration d'enregistrement d'un client utilisant au moins un terminal pour accéder à un service multimédia déployé sur un réseau IP au moyen d'une pluralité d'éléments de service, ledit procédé comprenant une étape d'envoi de paramètres de configuration audit terminal client, caractérisé en ce que ledit procédé comprend les étapes suivantes :

- affectation dudit client à un premier groupe de clients parmi une pluralité de groupes de clients selon une première répartition;
- calcul de premiers paramètres de distribution temporelle ($PT_i$) des enregistrements destinés aux clients dudit groupe, lesdits paramètres définissant un premier rythme d'enregistrement propre audit groupe; et en ce que
- ladite étape d'envoi envoie audit terminal du client lesdits premiers paramètres de distribution temporelle d'enregistrements propres à son groupe; et en ce que :
- lesdits premiers paramètres de distribution temporelle des enregistrements comprennent une durée d'attente à l'issue de laquelle un terminal client ayant envoyé une requête de réenregistrement au service et appartenant audit groupe peut réémettre sa requête auprès du service, lorsqu'il n'a pas reçu de réponse.

L'invention concerne enfin un produit programme d'ordinateur téléchargeable depuis un réseau de communication et/ou stocké sur un support lisible par ordinateur et/ou exécutable par un microprocesseur. Ledit produit programme d'ordinateur comprend des instructions de code de programme pour l'exécution du procédé selon l'invention.

## 5. Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels :

6

- la figure 1 présente de façon schématique un réseau IP mettant en oeuvre un service multimédia accessible à des terminaux clients préalablement enregistrés selon l'art antérieur;
- la figure 2 présente le procédé de configuration selon l'invention et les moyens fonctionnels mis en oeuvre par un serveur de configuration selon l'invention;
- la figure 3 présente un premier exemple de paramètre de configuration complémentaire selon l'invention;
- la figure 4 présente un deuxième exemple de paramètre de configuration complémentaire selon l'invention;
- la figure 5 présente un troisième exemple de paramètre de configuration complémentaire selon l'invention;
- la figure 6 présente un diagramme d'état illustrant un fonctionnement d'un terminal client mettant en oeuvre les paramètres de configuration selon l'invention;
- la figure 7 présente un schéma illustrant le rythme d'enregistrements des clients tel que défini par le serveur de configuration selon l'invention;
- la figure 8 présente un autre mode de réalisation du procédé et des moyens mis en oeuvre par le serveur de configuration selon l'invention;
- la figure 9 illustre un exemple de deuxième paramètre de configuration complémentaire selon l'invention; et
- la figure 10 présente de façon structurelle un serveur de configuration selon l'invention.

## 6. Description d'un mode de réalisation particulier de l'invention

Le principe général de l'invention repose sur la répartition des terminaux clients selon une pluralité de groupes et sur le calcul et l'envoi par le serveur de configuration au terminal client en ayant fait la requête de paramètres de configuration complémentaires définissant un rythme d'enregistrements pour les terminaux clients de ladite pluralité de groupes.

Selon l'invention, le terminal client n'émet plus à sa guise des requêtes d'enregistrements à destination du serveur d'accès, mais il applique le rythme défini par les paramètres de configuration complémentaires qu'il a reçus.

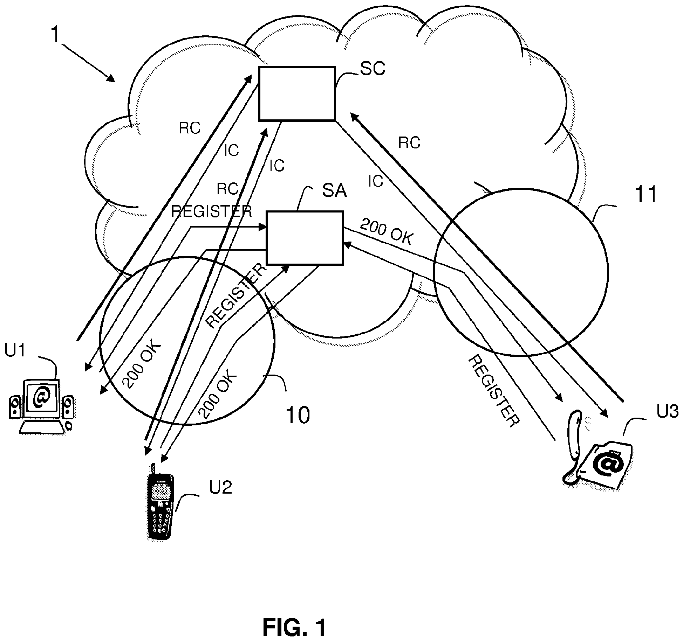

En référence à la Fig.1, on présente un réseau de télécommunication IP 1 mettant en oeuvre un service multimédia, par exemple de type conversationnel, accessible à des terminaux clients U1 à UN, N entier supérieur ou égal à 2, s'étant préalablement enregistrés.

La description qui va suivre s'appuie essentiellement sur l'exemple particulier d'un réseau IP mettant en oeuvre un service de type conversationnel. Toutefois, l'invention n'est pas limitée à ce type de service, mais s'applique de façon similaire à tout type de service multimédia nécessitant un enregistrement préalable tel que des services de visio, présence, IM (*Instant Messaging*), etc.

On notera que, compte tenu des déploiements actuels en matière de téléphonie sur IP, les exemples ci-après s'appuieront sur le protocole SIP.

L'accès au service est réalisé par une pluralité de PoPs (Points of Presence) 10, 11, permettant aux terminaux clients U1 à UN de se connecter au réseau 1 et de s'enregistrer au service. De façon simplifiée, on peut considérer qu'un tel réseau 1 comprend trois types d'équipements :

- les clients finaux, que sont les terminaux clients U1 à UN répartis entre les différents PoPs;
- des équipements d'accès au service, tel que l'équipement SBC (Session Border Controller) permettant de relayer les requêtes émises par des clients vers des équipements du coeur de réseau et un serveur de configuration (SC) permettant à un terminal client de récupérer des informations de configuration afin de pouvoir accéder au service;
- des équipements du coeur de réseau ou éléments de service, tels qu'un Serveur de Proximité (Proxy Server en anglais, SP) ou des serveurs de bases de données clients.

On notera que le serveur de configuration ou serveur de provisioning SC peut être partagé entre plusieurs PoPs, comme présenté en Fig. 1. Le serveur de configuration SC peut être, par exemple, un serveur DHCP (Dynamic Host Configuration Protocol), qui met en oeuvre le protocole DHCP selon la RFC 3361.

Lorsqu'un terminal d'un client se connecte au réseau, par exemple, lors de sa mise sous tension, directement, ou par l'intermédiaire d'une passerelle résidentielle, il peut envoyer en mode broadcast une requête de configuration RC, du type « DHCP_DISCOVER », de niveau IP, à laquelle un serveur de configuration SC du réseau de télécommunication 1 va répondre. En réponse, il reçoit des informations de configuration IC (DHCP_OFFER), comprenant notamment l'adresse du serveur SBC dont il dépend.

De façon alternative, on peut aussi envisager un mode "push", selon lequel le terminal du client reçoit des informations de configuration, sans avoir émis de requête particulière auprès du serveur de configuration. Dans l'exemple de réalisation qui suit, nous considérerons le cas où le terminal du client émet une requête de configuration RC.

Une fois qu'il a reçu les informations de configuration, le terminal du client envoie une requête d'enregistrement, par exemple une requête SIP REGISTER au serveur SBC, qui la relaie vers le coeur de réseau, au serveur de proximité SP. En réponse, le serveur de proximité SP lui envoie un message "200 OK" si l'enregistrement s'est bien passé, un message d'erreur de type 4xx sinon.

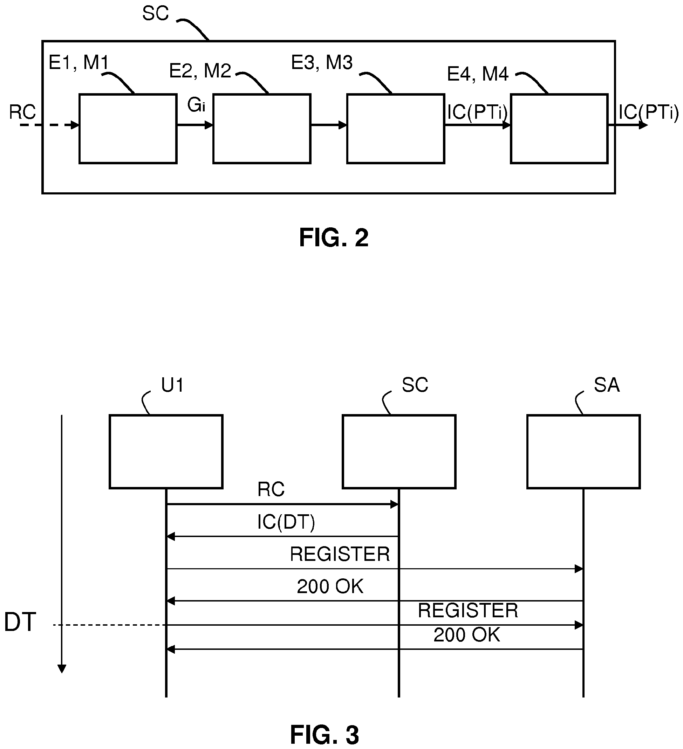

En référence à la Fig. 2, on présente un schéma fonctionnel du procédé mis en oeuvre par le serveur de configuration SC selon l'invention. On notera que la mise en oeuvre de la fonction qui va être décrite peut être partagée entre plusieurs équipements. Dans ce cas, on considère que les équipements impliqués sont capables de mettre en oeuvre les moyens de coopération nécessaires pour assurer la fonction selon l'invention. Les étapes mises en oeuvre par le procédé selon l'invention sont désignées par Ex et les moyens fonctionnels mis en oeuvre par le serveur de configuration selon l'inventions par Mx, x entier supérieur ou égal à 1.

En E1, le serveur de configuration SC reçoit une requête de configuration RC d'un terminal client $U_k$, k entier entre 1 et N, souhaitant accéder au service S. Selon l'art antérieur, le serveur de configuration récupère préalablement, par exemple dans sa mémoire 40, ou dans une base de données locale, des valeurs de paramètres de configuration associées à un identifiant du client/utilisateur.

En E2, selon l'invention, le serveur de configuration affecte ledit client à un groupe de clients $G_i$ parmi une pluralité de groupes $G_1$ à $G_M$, M entier supérieur ou égal à 1, en appliquant des règles de répartition préétablies. De telles règles sont généralement établies par l'opérateur de télécommunications, fournisseur du service S. En E3, le serveur de configuration SC selon l'invention calcule des valeurs de paramètres de configuration complémentaires $PT_i$, adaptées au groupe $G_i$, définissant un rythme d'enregistrements propre au groupe $G_i$. En E4, il envoie les paramètres de configuration IC classiques et les paramètres de rythme d'enregistrement $PT_i$ au terminal $U_k$ du client.

Un tel procédé permet de mettre en oeuvre une procédure de synchronisation préventive des enregistrements des terminaux clients répartis en groupes.

Les paramètres de rythme comprennent avantageusement :
- une date d'échéance ($DT_i$) indiquant un instant auquel les terminaux clients appartenant au groupe $G_i$ doivent envoyer une requête d'enregistrement auprès dudit service. Cette date est utilisée comme référence pour forcer l'envoi d'une demande d'enregistrement au serveur d'accès et donc synchroniser tous les clients d'un même groupe. Un format possible pour la date d'échéance est le suivant :

| Code | Len | Val |
|------|-----|-----|
| TBA  | 11  | DT  |

- Le champ « Code » renseigne le code de l'option. La valeur de ce champ doit être attribuée (TBA pour « *To Be Assigned* ») par IANA (*Internet Assigned Numbers Authority*). La longueur de ce champ est de 1 octet.
- Le champ « Len » renseigne la longueur de la valeur de l'option. La valeur de ce champ est égale à « 11 ».
- Le champ « Val » renseigne la valeur du timer date d'échéance. La valeur de ce champ respecte le format "2d1d1d1d1d1d1d1a1d1d". Un autre format tel que définit par la RFC2579 [RFC2579] peut être adopté. Cette valeur est exprimée de la façon suivante :

| Champ | Octets | Contenu | Valeur |
|-------|--------|---------|--------|
| 1 | 1-2 | Année | 0..65536 |
| 2 | 3 | Mois | 1..12 |
| 3 | 4 | Jour | 1..31 |
| 4 | 5 | Heure | 0..23 |
| 5 | 6 | Minutes | 0..59 |
| 6 | 7 | Secondes | 0..60 |
| 7 | 8 | Deci-secondes | 0..9 |
| 8 | 9 | direction par rapport à UTC | '+' / '-' |
| 9 | 10 | Heures par rapport à UTC | 0..13 |
| 10 | 11 | Minutes par rapport à UTC | 0..59 |
| E.g. Dimanche Avril 01, 2007 à 15:25:26 sera codé "200741152526» | | | |

- une durée d'expiration (ET) à l'issue de laquelle les terminaux clients enregistrés avec succès audit service et appartenant audit groupe doivent se réenregistrer auprès du serveur de proximité SP. Ce paramètre permet de forcer le rythme de réenregistrement des terminaux clients du groupe Gi considéré. Un format possible pour la durée d'expiration est le suivant :

| Code | Len | Val |
|------|-----|-----|
| TBA | 1 | ET |

- Le champ « Code » renseigne le code de l'option. La valeur de ce champ doit être attribuée par IANA (*Internet Assigned Numbers Authority*). La longueur de ce champ est de 1 octet.

- Le champ « Len » renseigne la longueur de la valeur de l'option. La valeur de ce champ est égale à « 1 ».

- Le champ « Val » renseigne la valeur du timer EXPIRE_TIMER. Cette valeur est exprimée en secondes. La valeur ET est utilisée pour positionné la valeur du tag « *expire* » des messages REGISTER.

- une durée d'attente à l'issue de laquelle un terminal client ayant envoyé une requête de réenregistrement audit service et appartenant au groupe $G_i$ peut réémettre sa requête auprès du service, lorsqu'il n'a pas reçu de réponse positive lors de l'enregistrement précédent. Ce paramètre permet notamment de synchroniser les réémissions de requêtes d'enregistrement par les terminaux clients d'un même groupe en cas de dysfonctionnement du serveur d'accès, et en particulier de non notification d'enregistrement par le serveur d'accès. Un format possible pour la durée d'attente est le suivant :

| Code | Len | Val |
|------|-----|-----|
| TBA | 1 | ST |

- Le champ « Code » renseigne le code de l'option. La valeur de ce champ doit être attribuée par IANA (*Internet Assigned Numbers Authority*). La longueur de ce champ est de 1 octet.

- Le champ « Len » renseigne la longueur de la valeur de l'option. La valeur de ce champ est égale à « 1 ».

- Le champ « Val » renseigne la valeur du paramètre durée d'attente (ou SERVICE_TIMER). Cette valeur est exprimée en « ms ».

En référence à la fig. 3, on présente un exemple de mise en oeuvre du paramètre de configuration complémentaire "date d'échéance" DT par le procédé selon l'invention. Le terminal client U1 envoie une requête de configuration RC au serveur de configuration SC. Le serveur de configuration selon l'invention lui envoie en réponse les paramètres de configuration habituels et le paramètre DT comme paramètre de rythme d'enregistrement complémentaire. Le terminal client envoie une première requête d'enregistrement au serveur de proximité SP. On notera que cette requête d'enregistrement peut être relayée par un élément d'accès de type SBC. Il reçoit une notification d'enregistrement « 200 OK » en réponse. A la date d'échéance, il réémet une nouvelle requête d'enregistrement conformément à la configuration reçue du serveur de configuration.

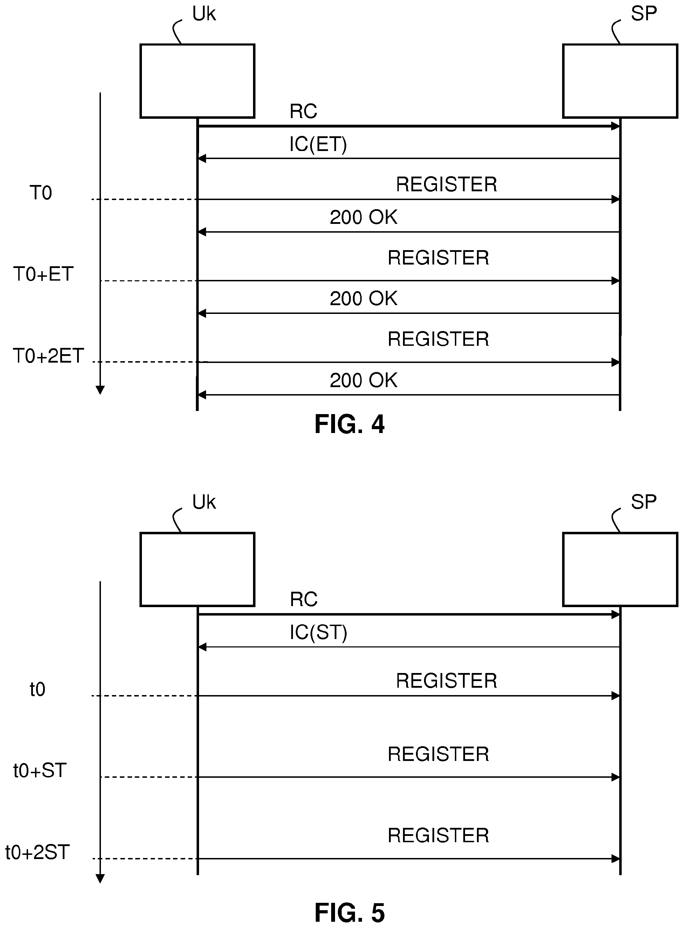

En référence à la Fig. 4, on présente un exemple de mise en oeuvre du paramètre de configuration complémentaire "durée d'expiration" ET. Le terminal client U1, après avoir reçus les paramètres de configuration du serveur de configuration, envoie une première demande d'enregistrement au serveur de proximité SP. Il reçoit une notification d'enregistrement « 200 OK » en réponse. Lorsque la durée d'expiration ET s'est écoulée depuis l'instant d'émission de sa première requête, il émet une deuxième requête à destination du serveur de proximité SP.

En référence à la Fig. 5, on présente un exemple de mise en oeuvre du paramètre de configuration complémentaire "durée d'attente" ST. Le terminal client $U_k$, après avoir reçu les paramètres de configuration du serveur de configuration, envoie une première d'enregistrement au serveur de proximité SP. Il ne reçoit pas de notification d'enregistrement « 200 OK ». Il attend donc que le temps correspondant à la valeur du paramètre "durée d'attente" soit écoulé pour renouveler sa requête d'enregistrement.

On présente maintenant, à titre d'exemple un modèle de calcul des valeurs des paramètres de configuration DT, ET et ST selon un mode de réalisation de l'invention. Il s'agit donc de distribuer l'ensemble des N terminaux clients sur un nombre M de groupes et d'affecter les mêmes valeurs de paramètres de configuration complémentaires aux membres d'un même groupe. Les mêmes valeurs de DT et de ET permettront de synchroniser les requêtes d'enregistrement (i.e. requêtes REGISTER) des terminaux clients d'un groupe donné en cas de fonctionnement normal, alors la même valeur de ST permettra de synchroniser les requêtes d'enregistrement en cas de dysfonctionnement (particulièrement non notification d'enregistrement de la part de la plateforme de service).

Pour chaque terminal client, on provisionne trois paramètres : DT, ST et ET. Il est à noter que dans le mode de réalisation de l'invention décrit ici, les paramètres ST et ET ne sont exploités que lorsque la date DT est échue. Auparavant, les terminaux clients adoptent un comportement classique. L'échéance de DT déclenchera en effet un événement SIP, à savoir l'envoi d'un message d'enregistrement avec mise à jour du timer durée d'expiration à la valeur ET. En cas de non réponse de la plateforme de service, la valeur du timer durée d'attente ST est prise en compte pour calculer la fenêtre de réémission. Le fait d'affecter la même valeur du timer ET à l'ensemble des clients d'un groupe donnée permet la synchronisation des requêtes d'enregistrement de ces clients dans les deux cas : cas de fonctionnement normal ou cas de dysfonctionnement susceptible de générer un effet d' « *Avalanche Restart* ».

On considère un durée maximale Tmax préconisée par l'opérateur pour que les N terminaux clients recouvrent leur accès au service en cas de problème. On définit le paramètre de configuration durée d'attente ST (Service Timer), soit en lui donnant une valeur constante pour l'ensemble des terminaux clients, soit des valeurs différentes pour chacun des M groupes. Considérons pour l'exemple que la valeur de ST est ST=Tmax. Cette valeur est renseignée par le fournisseur de service dans la base de données du serveur de configuration SC et fournie aux clients.

Le serveur de configuration, par exemple, le serveur DHCP, fournit, en même temps que les paramètres de configuration habituels, tels que des informations de connexion au service, une date d'échéance précise DTi ainsi que la valeur du timer du service ST. De plus, le fournisseur de service renvoie aussi la durée d'expiration des enregistrements ET. Dans notre exemple, nous considérerons ET=3*Tmax. A noter que Tmax ainsi que M sont des paramètres de service, qui ne sont pas envoyés aux clients.

La date d'échéance $DT_i$ de chaque groupe $G_i$ est calculée dans l'exemple à partir d'une date d'échéance DT choisie par le fournisseur de service. Lorsque cette date DTi est atteinte, tous les clients d'un même groupe doivent modifier leur comportement de réenregistrement, afin d'envoyer leurs futurs messages REGISTER aux dates Dij, avec DTi et Dij étant définies telles que pour tout groupe de clients Gi :

$$DTi = DT + i * Tmax/M$$

On s'assure ainsi que tous les clients de tous les groupes sont répartis équitablement entre DT et DT+Tmax à l'origine, puis sur un intervalle Tmax de manière cyclique.

$$Dij = DTi + j * ET \text{ (j débutant à 0 et étant incrémenté de 1)}$$

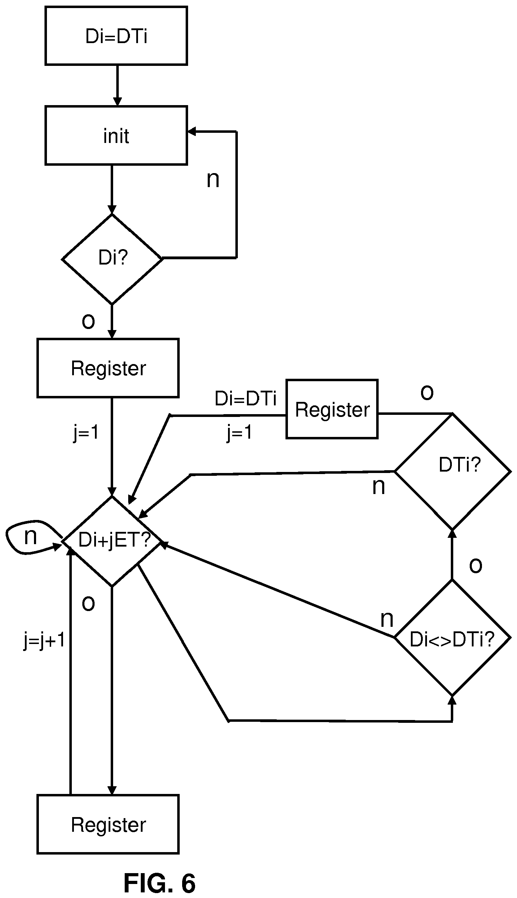

En référence à la Fig. 6, on présente un diagramme d'état illustrant le comportement d'un terminal client $U_k$ d'un groupe $G_i$ selon ce mode de réalisation de l'invention, dans le cas où un problème réseau Pb survient. A l'initialisation du processus, on a Di =DTi. Tant que la date Di n'est pas atteinte, le terminal adopte un comportement normal vis-à-vis de la gestion de son enregistrement au service. Lorsque la date Di est atteinte, comme décrit précédemment, le terminal émet une requête d'enregistrement et initialise un compteur j=1. On suppose qu'il reçoit une notification d'enregistrement réussi « 200 OK ». A partir de là, le terminal $U_k$ du client selon l'invention est apte à tester si l'instant présent est supérieur ou égal à la somme Di+jET avec j=1. Si c'est le cas, il réémet une requête d'enregistrement et incrémente le compteur j. Il vérifie également que la valeur de DTi n'a pas été mise à jour. Si tel était le cas, alors DTi serait supérieur à Di et DTi indiquerait la prochaine échéance d'enregistrement de synchronisation avec les autres membres du groupe $G_i$.

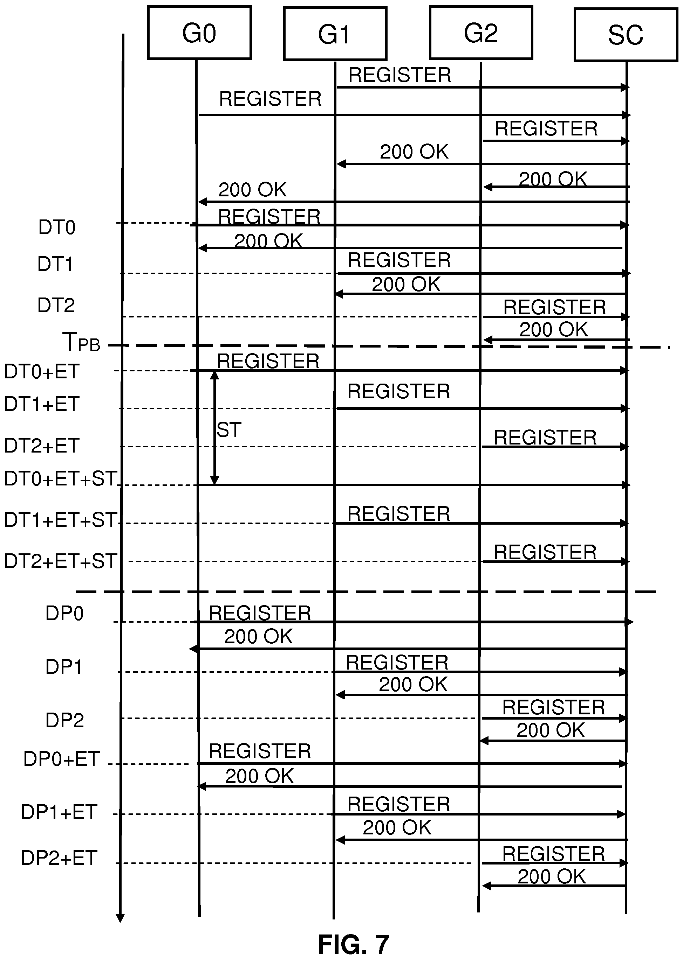

En référence à la figure 7, on présente un exemple d'application du procédé de configuration selon l'invention. Dans cet exemple, les terminaux clients sont répartis selon 3 groupes G0, G1 et G2. On considère que le fournisseur de service communique aux terminaux clients les paramètres de configuration complémentaires suivants :

- Groupe G0: (DT0, ST0, ET0) avec DT0 = DT, ST0 = Tmax, ET0=3*Tmax;
- Groupe G1 (DT1, ST1, ET1) avec DT1 = DT+Tmax/3, ST1 = Tmax, ET1=3*Tmax; et
- Groupe G2 (DT2, ST2, ET2) avec DT2 = DT+2*Tmax/3, ST2=Tmax, ET2=3*Tmax.

Avant l'échéance des dates DT0, DT1 et DT2, la notion de groupe n'est pas encore exploitée, et les terminaux s'enregistrent et se ré-enregistrent de manière plus ou moins anarchique. Dès lors que DT0, DT1 et DT2 sont atteintes, l'enregistrement des terminaux respecte les groupes auxquels leurs clients ont été affectés.

Ainsi, en fonctionnement normal, c'est-à-dire avant l'instant $T_{PB}$, les terminaux clients se réenregistrent en respectant le rythme indiqué par le paramètre ET. S'il advient que le service connaît une défaillance, comme c'est le cas à l'instant $T_{PB}$, les terminaux clients, ne recevant plus de notification d'enregistrement « 200 OK », se mettent à réémettre leurs messages d'enregistrement en respectant la durée d'attente ST qui a été attribuée à leur groupe. Lorsque le service redevient opérationnel, le serveur d'accès SA reçoit donc des sollicitations équitablement distribuées, ce qui permet d'éviter tout pic de charge. Les dates DP1, DP2, DP3 correspondent à l'envoi, pour chaque groupe, de la première demande d'enregistrement suivie d'une réponse positive.

Le serveur de configuration peut avantageusement mettre à jour les informations fournies afin de mieux contrôler et synchroniser cette procédure. Par exemple, lorsque la date d'échéance DT est passée depuis quelque temps, il peut être intéressant de fournir une nouvelle date DTi, à laquelle les clients vont réamorcer le processus. Ceci permet de resynchroniser l'ensemble des terminaux clients d'un ou plusieurs groupes, notamment pour prendre en considération les éventuelles dérives et les clients arrivés après le DTi de leur groupe initial.

En ce qui concerne les terminaux clients qui ont émis leur requête de configuration après la date DTi d'échéance initiale de leur groupe, le serveur de configuration peut, au choix :

- ne pas leur fournir de paramètres de configuration complémentaires à leur première connexion et attendre la prochaine mise à jour du DTi correspondant à leur groupe;
- leur fournir des paramètres de configuration complémentaires intégrant la prochaine valeur de DTi (si elle est connue) qui sera communiquée aux terminaux clients de leur groupe d'affection lors de la prochaine mise à jour; ou
- leur fournir une valeur D calculée de telle sorte que si le client doit appartenir au groupe $G_i$, et que le date courante est Du, on ait :

$$D = DTi + k*ET \text{ (avec k tel que k>ent((Du-DTi)/ET)+1)}$$

Ceci permet de s'assurer que le terminal client nouvellement arrivé sur le réseau démarrera la procédure au moment exact d'une synchronisation du groupe $G_i$ auquel on souhaite le rattacher.

On notera que, dans l'hypothèse où l'opérateur dispose des moyens de contrôle et de monitoring suffisants lui permettant de déterminer une date à laquelle le service doit redevenir opérationnel, il est tout à fait envisageable que le service de configuration indique aux terminaux clients, dans un paramètre de configuration complémentaire d'un autre type que ceux cités précédemment à titre d'exemple, de cesser provisoirement l'envoi de requêtes d'enregistrement au serveur d'accès concerné et leur communique le moment voulu de nouvelles informations de configuration, comprenant notamment une date d'échéance DTi telle qu'elle est calculée pour chaque groupe $G_i$ en fonction de la date DT envisagée du retour opérationnel du service. Un avantage est d'éviter l'envoi de messages de réenregistrement inutiles.

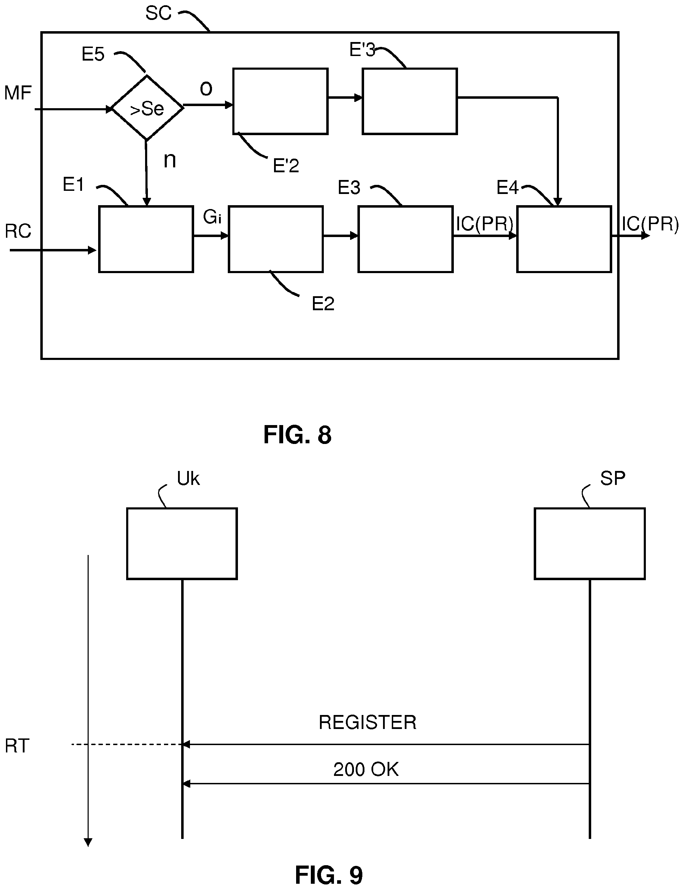

En référence à la fig. 8, on présente le procédé mis en oeuvre par le serveur de configuration selon un autre aspect de l'invention. On considère que les étapes E1 à E4 décrites en référence à la fig. 2 se sont déroulées normalement et que les cycles de réenregistrement des terminaux clients des différents groupes se succèdent selon le rythme instauré par les paramètres PTi. A un instant donné, une panne des terminaux clients survient. Il peut s'agir, par exemple, d'une coupure d'électricité dans un quartier d'affaires. Lorsque l'électricité est rétablie, l'ensemble des terminaux clients de ce quartier cherche à se réenregistrer au service simultanément.

Le procédé de configuration comprend en outre une étape E5, au cours de laquelle le serveur de configuration détecte un risque de surcharge de l'élément de service SA. Par exemple, un tel risque est détecté, dès qu'une mesure de fréquence de requêtes d'enregistrement reçues est au-delà d'un seuil prédéterminé. En E'2, le procédé selon l'invention affecte un terminal client $U_k$ souhaitant s'enregistrer, à un groupe $G'_i$ selon une deuxième répartition dépendant au moins d'une capacité de traitement dudit serveur d'accès pendant un intervalle de temps donné. Cette deuxième répartition peut avantageusement dépendre aussi de ladite fréquence mesurée. La nouvelle répartition est donc mise en oeuvre à la volée, par exemple en fonction d'un ordre de retour des terminaux clients U1 à UN sur le réseau. En E'3, le procédé selon l'invention calcule d'autres paramètres de configuration complémentaires $PT'_i$ définissant un deuxième rythme d'enregistrement des clients propre au groupe $G'_i$ et les envoie au terminal client $U_k$.

On notera que la deuxième répartition peut aussi être choisie identique à la première. On peut envisager également qu'elle soit appliquée seulement aux clients qui ont été affectés par la panne, à condition que le serveur de configuration dispose d'une telle information pour les clients qui lui envoient une demande d'enregistrement.

De façon avantageuse, les paramètres de configuration complémentaires définissant un deuxième rythme d'enregistrement des terminaux clients comprennent

- une durée d'attente avant enregistrement RT ou mode « *Pause* » : Ce mode consiste à conditionner l'envoi de message d'enregistrement vers le serveur d'accès au service à l'expiration d'un timer ou l'arrivée d'une échéance. Un format possible pour ce paramètre est le suivant :

| Code | Len | Val |
|------|-----|-----|
| TBA | 1 | RT |

Le champ « Code » renseigne le code de l'option. La valeur de ce champ doit être attribuée par IANA (*Internet Assigned Numbers Authority*). La longueur de ce champ est de 1 octet. Le champ « Len » renseigne la longueur de la valeur de l'option. La valeur de ce champ est égale à « 1 ». Le champ « Val » renseigne la valeur de RT. Cette valeur est exprimée en secondes.

En référence à la fig. 9, on présente un exemple de mise en oeuvre du paramètre de configuration complémentaire "durée d'attente avant enregistrement" RT par le procédé selon l'invention. Le terminal client $U_k$, de retour sur le réseau après une panne, envoie une requête de configuration RC au serveur de configuration SC. Le serveur de configuration selon l'invention lui envoie en réponse les paramètres de configuration habituels et le paramètre RT comme paramètre de rythme d'enregistrement complémentaire. Le terminal client n'enverra une première requête d'enregistrement au serveur de proximité SP qu'à l'issue de la durée RT.

En affectant des valeurs différentes de RT à des groupes de terminaux clients, le serveur de configuration peut répartir dans le temps les demandes d'enregistrement des terminaux clients. La valeur de RT est variable.

A titre d'exemple, on décrit maintenant un mode de calcul possible du paramètre RT pour un terminal client ayant émis une requête de configuration auprès du serveur de configuration. Si on note BT0 (BT pour *Bootstrapping Time* en anglais) la date à laquelle le serveur de configuration a détecté une panne de clients, le serveur de configuration indique à un terminal client le contactant après BT0 une date de réenregistrement RTi. Si on appelle St la date courante de la requête émise par le terminal client et si on considère, par exemple, que le serveur de provisioning dispose de l'information selon laquelle le service ne peut accepter que X connexions dans un temps Tb donné et de celle selon laquelle le nombre Y de demandes reçues depuis BT0 est supérieur à X, on a :

$$RTi = BT0 + i * Tb$$

tel que i débute à 1 et est incrémenté de 1 chaque fois que le nombre de terminaux clients à qui cette valeur RTi a été fournie atteint un multiple d'un seuil prédéterminé, inférieur à X. Les terminaux clients sont donc affectés à un groupe $G_i$ selon une répartition séquentielle, en fonction de l'ordre d'arrivée des requêtes.

Le fait de d'initier la valeur du compteur i à 1 vise à traduire le fait que les terminaux clients dont les demandes ont été servies en premier et ont permis typiquement la détection d'un redémarrage massif, se sont réenregistrés au service entre BT0 et BT0 + Tb. Ces premiers terminaux clients font donc partie d'un groupe $G_0$.

Avec ce mode de calcul, on s'assure qu'à chaque valeur du paramètre RTi, le nombre de requêtes de réenregistrements adressés par des terminaux clients au service ne dépasse pas X.

De façon avantageuse, d'autres paramètres de configuration définissant un rythme d'enregistrement peuvent être transmis au terminal client conjointement au paramètre RT. Il s'agit, par exemple, des paramètres ST et ET tels que définis précédemment.

On notera qu'une fois le phénomène passé, rien n'empêche le serveur de configuration de mettre en oeuvre la procédure préventive décrite précédemment. Au contraire, une telle mise en oeuvre est vivement conseillée, pour permettre à l'opérateur de maîtriser la distribution des enregistrements de ses terminaux clients dans le temps, au cas où un nouveau pic de surcharge devait survenir, cette fois en raison d'un problème lié au service lui-même. - Mode « *Continu* » : Ce mode consiste à ne pas interrompre l'envoi des demandes d'enregistrement au service mais de former des groupes qui peuvent s'enregistrer en même temps, selon une procédure similaire à la procédure préventive.

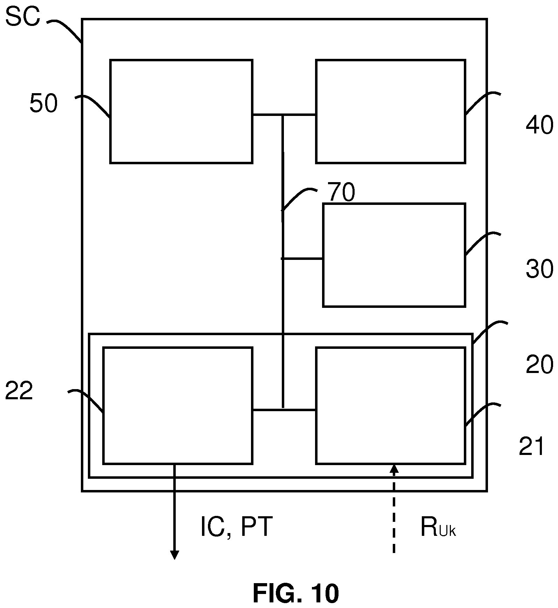

En référence à la Fig. 10, on présente, de façon synoptique, un serveur de configuration SC selon l'invention. Pour des questions de clarté, on considère dans l'exemple présenté en Fig. 2 le cas où un seul équipement SC remplit la fonction selon l'invention. On notera toutefois que l'invention n'est pas limitée à cet exemple et que, si plusieurs équipements SC sont mis en oeuvre, on considère qu'ils possèdent les moyens de coopération nécessaires à la réalisation de la fonction selon l'invention.

Le serveur de configuration SC comprend un bus de communication 70 auquel sont reliés une unité centrale 30, une mémoire non volatile 40, une mémoire vive 50 et une interface réseau de communication 20. La mémoire non volatile 40 est adaptée pour mémoriser les programmes mettant en oeuvre l'invention, tel que le procédé décrit en référence aux Fig. 2 et 8 et des informations de configuration associées à un identifiant du terminal client. La mémoire non volatile 40 est, par exemple, un disque dur. De manière plus générale, les programmes selon la présente invention et les données de configuration associées aux terminaux clients sont stockés dans des moyens de stockage. Ces moyens de stockage sont lisibles par un ordinateur ou un microprocesseur 30. Ces moyens de stockage sont intégrés ou non au serveur de configuration SC et peuvent être amovibles. Lors de la mise sous tension du serveur de configuration SC, les programmes sont transférés dans la mémoire vive 50 qui contient alors le code exécutable de l'invention ainsi que les données nécessaires à la mise en oeuvre de l'invention.

Le serveur de configuration SC comprend une interface réseau de communication 20, qui permet les échanges de données vers le réseau de télécommunication 1. Plus précisément, cette interface 20 comprend des moyens de réception 21 d'une requête de configuration RC en provenance d'un terminal client et des moyens d'envoi 22 d'informations de configuration en réponse à la dite requête.

**Revendications**

1. Serveur de configuration (SC) d'enregistrements d'un client utilisant au moins un terminal à un service multimédia déployé sur un réseau IP (1) par une pluralité d'éléments de service, ledit serveur de configuration comprenant des moyens (M4) d'envoi de paramètres de configuration adaptés (IC) audit client avant son enregistrement auprès d'un desdits éléments de service (SP), ledit serveur comprenant en outre des moyens d'affectation (M2) dudit client à un groupe de clients ($G_i$) parmi une pluralité de groupes de clients (G1 à GM) selon une première répartition, dépendant au moins d'une capacité de traitement dudit élément de service (SP), des moyens (M3) de calcul de premiers paramètres de distribution temporelle ($PT_i$) des enregistrements destinés aux clients dudit groupe, lesdits premiers paramètres définissant un premier rythme d'enregistrement propre audit groupe ($G_i$), et lesdits moyens d'envoi (M4) étant aptes à envoyer audit au moins un terminal ($U_k$) du client lesdits premiers paramètres de distribution temporelle d'enregistrements destinés audit groupe, **caractérisé en ce que** lesdits premiers paramètres de distribution temporelle des enregistrements comprennent une durée d'attente (ST) à l'issue de laquelle un client ayant envoyé une requête de réenregistrement audit service et appartenant audit groupe ($G_i$) peut réémettre sa requête auprès du service, lorsqu'il n'a pas reçu de réponse.

2. Serveur de configuration selon la revendication 1, **caractérisé en ce que** lesdits premiers paramètres ($PT_i$) de distribution temporelle des enregistrements comprennent au moins une date d'échéance ($DT_i$) indiquant un instant auquel les clients appartenant audit groupe ($G_i$) doivent envoyer une requête d'enregistrement auprès dudit service.

3. Serveur de configuration selon l'une des revendications 1 et 2, **caractérisé en ce que** lesdits premiers paramètres de distribution temporelle des enregistrements comprennent une durée d'expiration (ET) à l'issue de laquelle les clients enregistrés audit service et appartenant audit groupe doivent se réenregistrer auprès dudit service.

4. Serveur de configuration selon les revendications 1 à 3, **caractérisé en ce que** lesdits moyens de calcul (M3) sont aptes à recalculer lesdits premiers paramètres de distribution temporelle des enregistrements à intervalles réguliers pour ledit groupe ($G_i$) et lesdits moyens d'envoi (M4) sont aptes à les envoyer aux terminaux des clients enregistrés appartenant audit groupe.

5. Serveur de configuration selon l'une des revendications 1 à 4, **caractérisé en ce qu'**il comprend des moyens (M5) de détection d'un risque de surcharge dudit élément de service (SP), et **en ce que**, en cas de risque de surcharge détecté, lesdits moyens d'affectation (M2) sont aptes à affecter audit client un groupe ($G'_i$) selon une deuxième répartition et lesdits moyens de calcul (M3) sont aptes à calculer en outre des deuxièmes paramètres de distribution temporelle définissant un deuxième rythme d'enregistrements propre audit groupe ($G'_i$).

6. Serveur de configuration selon la revendication 5, **caractérisé en ce que** lesdits moyens de détection d'un risque de surcharge (M5) sont aptes à détecter un risque de surcharge lorsqu'une fréquence (FM) de requêtes d'enregistrement reçues passe au-delà d'un seuil prédéterminé (Se).

7. Serveur de configuration selon la revendication 5, **caractérisé en ce que** lesdits deuxièmes paramètres de distribution temporelle comprennent au moins une durée d'attente avant enregistrement (RT) définissant la durée à l'issue de laquelle ledit terminal peut envoyer une première requête d'enregistrement audit service.

8. Serveur de configuration selon la revendication 6, **caractérisé en ce que**, lorsque ladite fréquence de requêtes d'enregistrement reçues passe en deçà dudit seuil (Se), ledit serveur est apte à déclencher la mise en oeuvre desdits moyens de répartition (M2) des clients en une pluralité de groupes (G1 à GM) selon la première répartition, de calcul (M3) de premiers paramètres de distribution temporelle des enregistrement et d'envoi (M4) desdits paramètres auxdits clients en fonction de leur appartenance à un desdits premiers groupes.

9. Terminal d'un client connecté à réseau IP (1) sur lequel est déployé un service multimédia (S) au moyen d'une pluralité d'éléments de service, ledit terminal comprenant des moyens de réception de paramètres de configuration et des moyens d'enregistrement auprès d'un desdits éléments de service (SP) selon la configuration reçue, ledit serveur de configuration comprenant des moyens d'affectation (M2) dudit client à un groupe de clients ($G_i$) parmi une pluralité de groupes de clients ($G_1$ à $G_M$) selon une première répartition, dépendant au moins d'une capacité de traitement dudit élément de service (SP), des moyens (M3) de calcul de premiers paramètres de distribution temporelle ($PT_i$) des enregistrements destinés aux clients dudit groupe, lesdits paramètres définissant un premier rythme d'enregistrement propre audit groupe ($G_i$), et des moyens d'envoi (M4) aptes à envoyer, audit terminal ($U_k$) du client, lesdits premiers paramètres de distribution temporelle d'enregistrements destinés audit groupe, lesdits moyens d'enregistrement étant aptes à mettre en oeuvre un enregistrement dudit client auprès dudit service conforme audit premier rythme, **caractérisé en ce que** lesdits premiers paramètres de distribution temporelle des enregistrements comprennent une durée d'attente (ST) à l'issue de laquelle un client ayant envoyé une requête de réenregistrement audit service et appartenant audit groupe ($G_i$) peut réémettre sa requête auprès du service, lorsqu'il n'a pas reçu de réponse.

**10.** Réseau IP (1) comprenant un serveur de configuration (SC) d'enregistrement d'un client utilisant au moins un terminal (Uk) à un service multimédia (S) déployé sur ledit réseau au moyen d'éléments de service, ledit terminal, comprenant des moyens d'enregistrement auprès d'au moins un desdits éléments de service (SP), ledit serveur de configuration comprenant des moyens d'envoi (M4) de paramètres de configuration audit terminal client, ledit serveur de configuration comprenant en outre des moyens d'affectation (M2) dudit client à un groupe de clients ($G_i$) parmi une pluralité de groupes de clients (G1 à GM) selon une première répartition, des moyens (M3) de calcul de premiers paramètres de distribution temporelle des enregistrements ($PT_i$) des enregistrements destinés aux clients dudit groupe, lesdits paramètres définissant un premier rythme d'enregistrement propre audit groupe ($G_i$), lesdits moyens d'envoi étant aptes à envoyer audit client lesdits premiers paramètres de distribution temporelle d'enregistrement (PTi) propres à son groupe ($G_i$), et lesdits moyens d'enregistrement dudit terminal client ($U_k$) étant aptes à mettre en oeuvre un enregistrement dudit client auprès dudit élément de service conformément audit premier rythme, **caractérisé en ce que** lesdits premiers paramètres de distribution temporelle des enregistrements comprennent une durée d'attente (ST) à l'issue de laquelle un client ayant envoyé une requête de réenregistrement audit service et appartenant audit groupe ($G_i$) peut réémettre sa requête auprès du service, lorsqu'il n'a pas reçu de réponse.

**11.** Procédé de configuration d'enregistrement d'un client utilisant au moins un terminal ($U_k$) pour accéder à un service multimédia déployé sur un réseau IP au moyen d'une pluralité d'éléments de service, ledit procédé comprenant une étape d'envoi (E4) de paramètres de configuration audit terminal client, ledit procédé comprenant les étapes suivantes :

- affectation (E2) dudit client à un groupe de clients ($G_i$) parmi une pluralité de groupes de clients selon une première répartition; et
- calcul (E3) de premiers paramètres de distribution temporelle ($PT_i$) des enregistrements destinés aux clients dudit groupe, lesdits premiers paramètres définissant un premier rythme d'enregistrement propre audit groupe ($G_i$),

ladite étape d'envoi (E4) comprenant l'envoi audit terminal du client ($U_K$) desdits paramètres de distribution temporelle d'enregistrements propres à son groupe, **caractérisé en ce que** lesdits premiers paramètres de distribution temporelle des enregistrements comprennent une durée d'attente (ST) à l'issue de laquelle un client ayant envoyé une requête de réenregistrement audit service et appartenant audit groupe ($G_i$) peut réémettre sa requête auprès du service, lorsqu'il n'a pas reçu de réponse.

**12.** Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution du procédé selon la revendication 11.

**Patentansprüche**

**1.** Konfigurationsserver (SC) von Registrierungen eines mindestens ein Endgerät verwendenden Clients bei einem Multimedia-Dienst, der auf einem IP-Netzwerk (1) von einer Vielzahl von Dienstelementen bereitgestellt wird, wobei der Konfigurationsserver Einrichtungen (M4) zum Senden von angepassten Konfigurationsparametern (IC) an den Client vor seiner Registrierung bei einem der Dienstelemente (SP) enthält, wobei der Server außerdem Einrichtungen (M2) zur Zuweisung des Clients zu einer Clientgruppe ($G_i$) unter einer Vielzahl von Clientgruppen (G1 bis GM) gemäß einer ersten Verteilung, die mindestens von einer Verarbeitungskapazität des Dienstelements (SP) abhängt, Einrichtungen (M3) zur Berechnung erster Zeitverteilungsparameter ($PT_i$) der für die Clients der Gruppe bestimmten Registrierungen enthält, wobei die ersten Parameter einen ersten der Gruppe ($G_i$) eigenen Registrierungsrhythmus definieren, und die Sendeeinrichtungen (M4) fähig sind, an das mindestens eine Endgerät ($U_k$) des Clients die ersten Zeitverteilungsparameter von Registrierungen zu senden, die für die Gruppe bestimmt sind, **dadurch gekennzeichnet, dass** die ersten Zeitverteilungsparameter der Registrierungen eine Wartedauer (ST) enthalten, nach der ein Client, der eine Anforderung zur erneuten Registrierung beim Dienst gesendet hat und zur Gruppe ($G_i$) gehört, seine Anforderung erneut an den Dienst senden kann, wenn er keine Antwort erhalten hat.

**2.** Konfigurationsserver nach Anspruch 1, **dadurch gekennzeichnet, dass** die ersten Zeitverteilungsparameter ($PT_i$) der Registrierungen mindestens ein Fälligkeitsdatum ($DT_i$) enthalten, das einen Augenblick anzeigt, in dem die zu der Gruppe ($G_i$) gehörenden Clients eine Registrierungsanforderung an den Dienst senden müssen.

**3.** Konfigurationsserver nach einem der Ansprüche 1 und 2, **dadurch gekennzeichnet, dass** die ersten Zeitverteilungsparameter der Registrierungen eine Ablaufdauer (ET) enthalten, nach der die beim Dienst registrierten und zu der Gruppe gehörenden Clients sich erneut beim Dienst registrieren müssen.

**4.** Konfigurationsserver nach den Ansprüchen 1 bis 3, **dadurch gekennzeichnet, dass** die Recheneinrichtungen (M3) fähig sind, die ersten Zeitverteilungsparameter des Registrierungen in regelmäßigen Abständen für die Gruppe ($G_i$) erneut zu berechnen, und die Sendeeinrichtungen (M4) fähig sind, sie an die Endgeräte der registrierten Clients zu senden, die zu der Gruppe gehören.

**5.** Konfigurationsserver nach einem der Ansprüche 1 bis 4, **dadurch gekennzeichnet, dass** er Einrichtungen (M5) zur Erfassung einer Gefahr der Überlastung des Dienstelements (SP) enthält, und dass im Fall einer erfassten Überlastungsgefahr die Zuweisungseinrichtungen (M2) fähig sind, dem Client eine Gruppe ($G'_i$) gemäß einer zweiten Verteilung zuzuweisen, und die Recheneinrichtungen (M3) fähig sind, außerdem zweite Zeitverteilungsparameter zu berechnen, die einen zweiten Rhythmus von Registrierungen definieren, der der Gruppe ($G'_i$) eigen ist.

**6.** Konfigurationsserver nach Anspruch 5, **dadurch gekennzeichnet, dass** die Einrichtungen zur Erfassung einer Überlastungsgefahr (M5) eine Überlastungsgefahr erfassen können, wenn eine Frequenz (FM) von empfangenen Registrierungsanforderungen eine vorbestimmte Schwelle (Se) überschreitet.

**7.** Konfigurationsserver nach Anspruch 5, **dadurch gekennzeichnet, dass** die zweiten Zeitverteilungsparameter mindestens eine Wartedauer vor der Registrierung (RT) enthalten, die die Dauer definiert, nach der das Endgerät eine erste Registrierungsanforderung an den Dienst senden kann.

**8.** Konfigurationsserver nach Anspruch 6, **dadurch gekennzeichnet, dass**, wenn die Frequenz von empfangenen Registrierungsanforderungen die Schwelle (Se) unterschreitet, der Server fähig ist, die Anwendung der Einrichtungen (M2) zur Verteilung der Clients in eine Vielzahl von Gruppen (G1 bis GM) gemäß der ersten Verteilung, zur Berechnung (M3) erster Zeitverteilungsparameter der Registrierungen und zum Senden (M4) der Parameter an die Clients abhängig von ihrer Zugehörigkeit zu einer der ersten Gruppen auszulösen.

**9.** Endgerät eines mit einem IP-Netzwerk (1) verbundenen Clients, auf dem ein Multimedia-Dienst (S) mit Hilfe einer Vielzahl von Dienstelementen bereitgestellt wird, wobei das Endgerät Empfangseinrichtungen von Konfigurationsparametern und Einrichtungen zur Registrierung bei einem der Dienstelemente (SP) gemäß der empfangenen Konfiguration enthält, wobei der Konfigurationsserver Einrichtungen (M2) zur Zuweisung des Clients zu einer Clientgruppe ($G_i$) unter einer Vielzahl von Clientgruppen ($G_1$ bis $G_M$) gemäß einer ersten Verteilung, die mindestens von einer Verarbeitungskapazität des Dienstelements (SP) abhängt, Einrichtungen (M3) zur Berechnung erster Zeitverteilungsparameter ($PT_i$) der für die Clients der Gruppe bestimmten Registrierungen, wobei die Parameter einen ersten der Gruppe ($G_i$) eigenen Registrierungsrhythmus definieren, und Sendeeinrichtungen (M4) enthält, die an das Endgerät ($U_k$) des Clients die für die Gruppe bestimmten ersten Zeitverteilungsparameter von Registrierungen senden können, wobei die Registrierungseinrichtungen fähig sind, eine Registrierung des Clients bei dem Dienst gemäß dem ersten Rhythmus anzuwenden, **dadurch gekennzeichnet, dass** die ersten Zeitverteilungsparameter der Registrierungen eine Wartedauer (ST) enthalten, nach der ein Client, der eine Anforderung der erneuten Registrierung an den Dienst gesendet hat und zur Gruppe ($G_i$) gehört, seine Anforderung erneut an den Dienst senden kann, wenn er keine Antwort erhalten hat.

**10.** IP-Netzwerk (1), das einen Konfigurationsserver (SC) zur Registrierung eines Clients, der mindestens ein Endgerät (Uk) verwendet, bei einem Multimedia-Dienst (S) enthält, der im Netz mit Hilfe von Dienstelementen bereitgestellt wird, wobei das Endgerät Einrichtungen zur Registrierung bei mindestens einem der Dienstelemente (SP) enthält, wobei der Konfigurationsserver Sendeeinrichtungen (M4) von Konfigurationsparametern an das Client-Endgerät enthält, wobei der Konfigurationsserver außerdem Einrichtungen (M2) zur Zuweisung des Clients zu einer Clientgruppe ($G_i$) unter einer Vielzahl von Clientgruppen (G1 bis GM) gemäß einer ersten Verteilung, Einrichtungen (M3) zur Berechnung erster Zeitverteilungsparameter ($PT_i$) der Registrierungen für die Clients der Gruppe, wobei die Parameter einen ersten Registrierungsrhythmus definieren, der der Gruppe ($G_i$) eigen ist, wobei die Sendeeinrichtungen fähig sind, an den Client die ersten seiner Gruppe ($G_i$) eigenen Registrierungs-Zeitverteilungsparameter (PTi) zu senden, und die Registrierungseinrichtungen des Client-Endgeräts ($U_k$) fähig sind, eine Registrierung des Clients beim Dienstelement gemäß dem ersten Rhythmus anzuwenden, **dadurch gekennzeichnet, dass** die ersten Zeitverteilungsparameter der Registrierungen eine Wartedauer (ST) enthalten, nach der ein Client, der eine Anforderung der erneuten Registrierung an den Dienst gesendet hat und zur Gruppe ($G_i$) gehört, seine Anforderung erneut an den Dienst senden kann, wenn er keine Antwort erhalten hat.

**11.** Verfahren zur Registrierungskonfiguration eines Clients, der mindestens ein Endgerät ($U_k$) verwendet, um auf einen Multimedia-Dienst zuzugreifen, der auf einem IP-Netzwerk mittels einer Vielzahl von Dienstelementen bereitgestellt wird, wobei das Verfahren einen Sendeschritt (E4) von Konfigurationsparametern an das Client-Endgerät enthält, wobei das Verfahren die folgenden Schritte enthält:

- Zuweisung (E2) des Clients zu einer Clientgruppe ($G_i$) unter einer Vielzahl von Clientgruppen gemäß einer ersten Verteilung; und
- Berechnung (E3) erster Zeitverteilungsparameter ($PT_i$) der für die Clients der Gruppe bestimmten Registrierungen, wobei die ersten Parameter einen ersten Registrierungsrhythmus definieren, der der Gruppe ($G_i$) eigen ist,

wobei der Sendeschritt (E4) das Senden an das Endgerät des Clients ($U_K$) der Zeitverteilungsparameter von Registrierungen, die seiner Gruppe eigen sind, enthält, **dadurch gekennzeichnet, dass** die ersten Zeitverteilungsparameter des Registrierungen eine Wartedauer (ST) enthalten, nach der ein Client, der eine Anforderung einer erneuten Registrierung an den Dienst gesendet hat und zur Gruppe ($G_i$) gehört, seine Anforderung erneut an den Dienst senden kann, wenn er keine Antwort empfangen hat.

**12.** Computerprogrammprodukt, das von einem Kommunikationsnetz heruntergeladen und/oder auf einem computerlesbaren Träger gespeichert und/oder von einem Mikroprozessor ausgeführt werden kann, **dadurch gekennzeichnet, dass** es Programmcodeanweisungen zur Ausführung des Verfahrens nach Anspruch 11 enthält.

**Claims**

**1.** Configuration server (SC) for configuring registrations of a client using at least one terminal with a multimedia service deployed on an IP network (1) by a plurality of service elements, said configuration server comprising means (M4) for dispatching suitable configuration parameters (IC) to said client before their registration with one of said service elements (SP), said server furthermore comprising means (M2) for assigning said client to a group of clients ($G_i$) from among a plurality of groups of clients (G1 to GM) according to a first distribution, dependent at least on a processing capacity of said service element (SP), means (M3) for calculating first parameters of temporal distribution ($PT_i$) of the registrations intended for the clients of said group, said first parameters defining a first registration rate specific to said group ($G_i$), and said dispatching means (M4) being able to dispatch to said at least one terminal ($U_k$) of the client said first parameters of temporal distribution of registrations intended for said group, **characterized in that** said first parameters of temporal distribution of the registrations comprise a standby duration (ST) on completion of which a client having dispatched a request for reregistration to said service and belonging to said group ($G_i$) can resend their request of the service, when they have not received any response.

**2.** Configuration server according to Claim 1, **characterized in that** said first parameters ($PT_i$) of temporal distribution of the registrations comprise at least one deadline date ($DT_i$) indicating an instant at which the clients belonging to said group ($G_i$) must dispatch a request for registration with said service.

**3.** Configuration server according to one of Claims 1 and 2, **characterized in that** said first parameters of temporal distribution of the registrations comprise an expiry duration (ET) on completion of which the clients registered with said service and belonging to said group must reregister with said service.

**4.** Configuration server according to Claims 1 to 3, **characterized in that** said calculation means (M3) are able to recalculate said first parameters of temporal distribution of the registrations at regular intervals for said group ($G_i$) and said dispatching means (M4) are able to dispatch them to the terminals of the registered clients belonging to said group.

**5.** Configuration server according to one of Claims 1 to 4, **characterized in that** it comprises means (M5) for detecting a risk of overload of said service element (SP), and **in that**, should a risk of overload be detected, said assignment means (M2) are able to assign to said client a group ($G'_i$) according to a second distribution and said calculation means (M3) are able furthermore to calculate second parameters of temporal distribution defining a second rate of registrations specific to said group ($G'_i$).

**6.** Configuration server according to Claim 5, **characterized in that** said means for detecting a risk of overload (M5) are able to detect a risk of overload when a frequency (FM) of registration requests received passes beyond a predetermined threshold (Se).

7. Configuration server according to Claim 5, **characterized in that** said second parameters of temporal distribution comprise at least one pre-registration standby duration (RT) defining the duration on completion of which said terminal can dispatch a first request for registration to said service.

8. Configuration server according to Claim 6, **characterized in that**, when said frequency of registration requests received passes below said threshold (Se), said server is able to trigger the implementation of said means (M2) for distributing the clients into a plurality of groups (G1 to GM) according to the first distribution, of the means (M3) for calculating first parameters of temporal distribution of the registrations and of the means (M4) for dispatching said parameters to said clients as a function of their membership in one of said first groups.

9. Terminal of a client connected to an IP network (1) on which is deployed a multimedia service (S) by means of a plurality of service elements, said terminal comprising means for receiving configuration parameters and means for registering with one of said service elements (SP) according to the configuration received, said configuration server comprising means (M2) for assigning said client to a group of clients ($G_i$) from among a plurality of groups of clients ($G_1$ to $G_M$) according to a first distribution, dependent at least on a processing capacity of said service element (SP), means (M3) for calculating first parameters of temporal distribution ($PT_i$) of the registrations intended for the clients of said group, said parameters defining a first registration rate specific to said group ($G_i$), and dispatching means (M4) able to dispatch, to said terminal ($U_k$) of the client, said first parameters of temporal distribution of registrations intended for said group, said registration means being able to implement a registration of said client with said service in accordance with said first rate, **characterized in that** said first parameters of temporal distribution of the registrations comprise a standby duration (ST) on completion of which a client having dispatched a request for reregistration to said service and belonging to said group ($G_i$) can resend their request of the service, when they have not received any response.

10. IP Network (1) comprising a configuration server (SC) for configuring registration of a client using at least one terminal (Uk) with a multimedia service (S) deployed on said network by means of service elements, said terminal comprising means for registering with at least one of said service elements (SP), said configuration server comprising means for dispatching (M4) configuration parameters to said client terminal, said configuration server furthermore comprising means (M2) for assigning said client to a group of clients ($G_i$) from among a plurality of groups of clients (G1 to GM) according to a first distribution, means (M3) for calculating first parameters of temporal distribution ($PT_i$) of the registrations intended for the clients of said group, said parameters defining a first registration rate specific to said group ($G_i$), said dispatching means being able to dispatch to said client said first parameters of temporal distribution of registration (PTi) specific to their group ($G_i$), and said means of registration of said client terminal ($U_k$) being able to implement a registration of said client with said service element in accordance with said first rate, **characterized in that** said first parameters of temporal distribution of the registrations comprise a standby duration (ST) on completion of which a client having dispatched a request for reregistration to said service and belonging to said group ($G_i$) can resend their request of the service, when they have not received any response.

11. Method of configuring registration of a client using at least one terminal ($U_k$) to access a multimedia service deployed on an IP network by means of a plurality of service elements, said method comprising a step (E4) of dispatching configuration parameters to said client terminal, said method comprising the following steps:

   - assignment (E2) of said client to a group of clients ($G_i$) from among a plurality of groups of clients according to a first distribution; and
   - calculation (E3) of first parameters of temporal distribution ($PT_i$) of the registrations intended for the clients of said group, said first parameters defining a first registration rate specific to said group ($G_i$), said dispatching step (E4) comprising the dispatching to said terminal of the client ($U_K$) of said parameters of temporal distribution of registrations specific to their group, **characterized in that** said first parameters of temporal distribution of the registrations comprise a standby duration (ST) on completion of which a client having dispatched a request for reregistration to said service and belonging to said group ($G_i$) can resend their request of the service, when they have not received any response.

12. Computer program product downloadable from a communication network and/or stored on a medium readable by computer and/or executable by a microprocessor, **characterized in that** it comprises program code instructions for the execution of the method according to Claim 11.

**FIG. 1**

**FIG. 2**

**FIG. 3**

**FIG. 4**

**FIG. 5**

**FIG. 6**

**FIG. 7**

**FIG. 8**

**FIG. 9**

SC

50

22

70

40

30

20

21

IC, PT

$R_{Uk}$

**FIG. 10**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

* JP 2006042176 B